# EUROPÄISCHE PATENTSCHRIFT

(11) **EP 1 979 919 B1**
(45) Veröffentlichungstag und Bekanntmachung des Hinweises auf die Patenterteilung: **04.04.2018**
(21) Anmeldenummer: 07702620.1
(22) Anmeldetag: 09.01.2007
(51) Int. Cl.: H01F 7/127, B23K 11/14, B23K 11/20, H01F 7/08

(54) **VERFAHREN ZUM FÜGEN EINES POLROHRS**
METHOD FOR JOINING A POLE TUBE
PROCEDE POUR JOINDRE UN TUBE POLAIRE

(30) Priorität: 17.01.2006 DE 102006002362; 27.03.2006 DE 102006014020
(43) Veröffentlichungstag der Anmeldung: 15.10.2008
(73) Patentinhaber: ROBERT BOSCH GMBH, 70442 Stuttgart (DE)
(72) Erfinder: GRÜN, Jürgen, 97816 Lohr (DE); GIEGERICH, Christoph, 63853 Mömlingen (DE); SCHEMPP, Roland, 71665 Vaihingen (DE)
(74) Vertreter: Thürer, Andreas
(86) Internationale Anmeldenummer: PCT/EP2007/000100
(87) Internationale Veröffentlichungsnummer: WO 2007/082651

(56) Entgegenhaltungen:
- DE-A1- 10 243 165
- JP-A- 7 164 158
- JP-A- 9 066 368
- JP-A- 10 128 550
- SU-A1- 1 320 032

## Beschreibung

Die Erfindung betrifft ein Verfahren zum Fügen eines Polrohres eines Hubmagneten, insbesondere für ein hydraulisches Ventil, gemäß dem Oberbegriff des Patentanspruchs 1.

Ein derartiges Polrohr ist aus der DE 102 43 165 A1 bekannt und ist Bestandteil eines druckdichten Hubmagneten, der neben dem Polrohr eine Spule zur Betätigung eines in einem Ankerraum des Polrohrs axial beweglich geführten Ankers hat, wobei die Spule das Polrohr umgibt. Dieses besteht im wesentlichen aus einem Polstück, welches über ein Zentralgewinde in ein Ventilgehäuse einschraubbar ist, einem unmagnetischen Zwischenstück und einem sich an dieses anschließenden Rohrstück, welches an der vom Polstück abgewandten Seite stirnseitig mittels eines als Hubbegrenzung dienenden Bauteils verschlossen ist. Die Hubbegrenzung kann auch in das Rohrstück integriert sein. Das Polstück, das Zwischenstück, das Rohrstück und die Hubbegrenzung begrenzen den Ankerraum für den mit der Spule zusammenwirkenden Anker. Dieser ist mit einem Stößel verbunden oder als separates Teil ausgeführt, der das Polstück in axialer Richtung durchsetzt und zur Betätigung eines Ventilschiebers des hydraulischen Ventils dient. Das unmagnetische Zwischenstück dient zur Umleitung des magnetischen Flusses in den Anker.

Dieses unmagentische Zwischenstück kann gemäß der DE 197 07 587 A1 beispielsweise mit einem Bronze-Auftragschweißverfahren oder durch Einlöten von austenitischem Stahl in das Polrohr eingebaut. Beim Einsatz derartiger Verfahren ist es erforderlich, dass das Polrohr an der den Ankerraum begrenzenden Innenumfangswandung nachbearbeitet wird, um eine glatte Lauffläche für den Anker herzustellen. Zur Beseitigung dieses Nachteils wird in der vorgenannten DE 102 43 165 A1 vorgeschlagen, das Polstück, das Zwischenstück und das Rohrstück derart thermisch zu fügen, dass sich ohne Nachbearbeitung eine glatte Lauffläche ergibt. Als thermisches Fügeverfahren hat sich dabei insbesondere das Kondensatorentladungs-schweißen (KES) als besonders vorteilhaft erwiesen, da sich durch dieses Verfahren die Bauteile aufgrund der partiellen Aufschmelzung ohne Ausglühen und Verzug miteinander verbinden lassen.

Es zeigte sich jedoch, dass es bei komplex aufgebauten oder dünnwandigen Polrohren aufgrund der zum Aufschmelzen in das Polstück, das Zwischenstück und das Rohrstück eingebrachten Energie zu einem leichten Verzug oder zur thermischen Überlastung der Bauelemente kommen kann, so dass doch noch eine Nachbearbeitung vor dem Einsetzen des Ankers in den Ankerraum erforderlich ist - eine derartige Nachbearbeitung setzt jedoch ein einseitiges offenes Polrohr voraus, so dass beispielsweise die den Hub des Ankers begrenzten Hubbgrenzung nicht einstückig mit dem Rohrstück ausgebildet werden kann sondern nachträglich eingefügt werden muß.

Demgegenüber liegt der Erfindung die Aufgabe zugrunde, ein Polrohr und einen Hubmagneten zu schaffen, die auf einfache Weise ohne Nachbearbeitung herstellbar sind.

Diese Aufgabe wird durch ein Verfahren zum Fügen eines Polrohres mit den Merkmalen des Patentanspruchs 1 gelöst.

Erfindungsgemäß ist die Stirnflächengeometrie der Fügepartner, d.h. des Polstücks, des unmagnetischen Zwischenstücks und des Rohrstücks derart gewählt, dass der resultierende elektrische Widerstand der Fügepartner im Fügebereich, d.h. in dem aufzuschmelzenden Bereich im wesentlichen gleich ist. Durch diese Maßnahme ist gewährleistet, dass beim Schweißen der Wärmeeintrag in die Fügepartner etwa gleich ist, so dass sich die Bauelemente mit hoher Präzision und ohne Nachbearbeitung miteinander verbinden lassen - der Fertigungsaufwand für ein derartiges Polrohr ist gegenüber herkömmlichen Lösungen wesentlich verringert. Desweiteren läßt sich durch diese Vorgehensweise die Überhitzung und damit eine Gefügeumwandlung eines Fügepartners vermeiden, so dass die Fertigungsqualität weiter verbessert ist.

Erfindungsgemäß erfolgt die Formgebung unter Berücksichtigung der Schmelzpunkte der Materialien, wobei bei der Formgebung der Stirnflächen zu berücksichtigen ist, dass ein Fügepartner aus einem Material mit vergleichsweise geringem Schmelzpunkt nicht vorzeitig, d.h. vor Aufschmelzen des anderen Fügepartners, auf seine Schmelztemperatur erwärmt wird.

Erfindungsgemäß wird es bevorzugt, wenn der Fügepartner aus einem Material mit einem niedrigerem spezifischen Widerstand stirnseitig mit einer kleineren Querschnittsfläche als der andere Fügepartner mit größerem spezifischen Widerstand ausgebildet ist.

Dabei wird das andere Bauteil mit entsprechend größerer Stirnfläche ausgeführt - erfindungsgemäß wird es bevorzugt, wenn dieses Bauteil mit einer ebenen Stirnfläche ausgebildet ist.

Der Fügepartner mit dem niedrigeren spezifischem Widerstand kann im Fügebereich mit zumindest einem dachförmig vorspringenden Ringvorsprung versehen sein, dessen Scheitel dann die resultierende Querschnittsfläche bildet.

Die erfindungsgemäß ausgebildeten Fügepartner lassen sich besonders einfach durch Kondensatorenentladungsschweißen (KES) verbinden. Selbstverständlich sind auch andere Widerstandsschweißverfahren oder dergleichen einsetzbar.

Weitere vorteilhafte Ausgestaltungen der Erfindung sind Gegenstand sonstiger Unteransprüche.

Im Folgenden werden bevorzugte Ausführungsbeispiele der Erfindung anhand schematischer Zeichnungen näher erläutert. Es zeigen:
Figur 1 einen Längsschnitt durch ein Polrohr eines Hubmagneten eines hydraulischen Ventils;
Figur 2 eine Detailansicht eines Fügebereichs zwischen einem Rohrstück und einem nicht magnetisierbaren Zwischenstück;
Figur 3 eine Detailansicht eines weiteren Ausführungsbeispiels eines Fügebereichs und
Figur 4 ein drittes Ausführungsbeispiel eines Fügebereichs eines erfindungsgemäß gefügten Polrohrs.

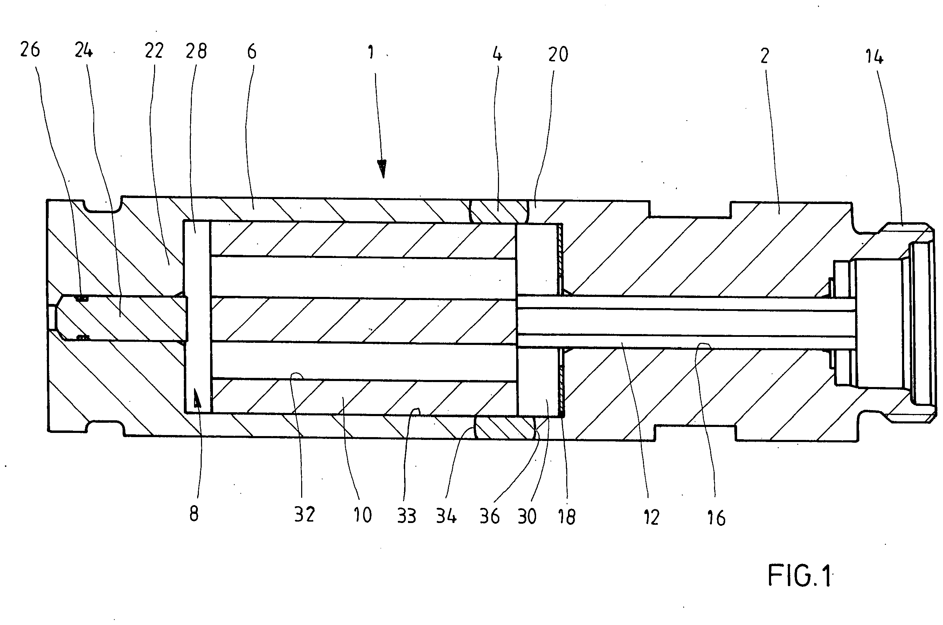

Figur 1 zeigt einen Längsschnitt durch ein Polrohr 1 eines einfachwirkenden Hubmagnets in druckdichter Bauweise. Das Polrohr 1 besteht im wesentlichen aus einem Polstück 2, einem Zwischenstück 4 und einem Rohrstück 6, die durch ein thermisches Fügeverfahren, beim dargestellten Polrohr durch Kondensatorentladungs-schweißen (KES) miteinander verbunden sind. Diese drei Bauelemente bilden gemeinsam einen Ankerraum 8 aus, in dem ein Anker 10 des Hubmagneten axial verschiebbar geführt ist. Am Anker 10 ist ein Stößel 12 befestigt bzw. lösbar montiert, der das Polstück 2 in Axialrichtung durchsetzt und der zur Betätigung eines Steuerschiebers eines über den Hubmagneten zu betätigenden Ventils dient.

Das Polstück 2 hat an seinem in Figur rechten Endabschnitt ein Zentralgewinde 14, mit dem es in eine Ventilbohrung eines Ventilgehäuses einschraubbar ist, so dass der Stößel 12 mit dem Steuerschieber des Ventils in Wirkverbindung gelangt. Der beim dargestellten Polrohr mit einem sechseckigen Querschnitt ausgeführte Stößel 12 durchsetzt eine Durchgangsbohrung 16 des Polstücks 2, die sich einerseits im Bereich des Zentralgewindes 14 stufenförmig erweitert und andererseits in den Ankerraum 8 einmündet. Auf die vom Stößel 12 durchsetzte Stirnfläche des Ankerraums 8 ist ein Antiklebeplättchen 18 aufgebracht, das ein magnetisches Festhaften des Ankers 10 in seiner rechten Endposition verhindert.

Den in Figur 1 linken Endabschnitt des Polstücks 2 bildet eine Ringwandung 20, an deren Stirnfläche das ringförmige Zwischenstück 4 angesetzt ist. Dieses ringförmige Zwischenstück 4 besteht aus einem nichtmagnetisierbarem Material, beispielsweise austenitischem Stahl oder Bronze. Das Polstück 2 und das Rohrstück 6 bestehen dagegen aus einem magnetisierbarem Material, beispielsweise Automatenstahl.

Das Rohrstück 6 ist mit der vom Polstück 2 entfernten Stirnfläche des Zwischenstücks 4 verbunden und hat einen etwa becherförmigen Aufbau, dessen Boden eine Hubbegrenzung 22 für den Anker 10 ausbildet. Beim dargestellten Polrohr ist diese Hubbegrenzung 22 einstückig mit dem Rohrstück 6 ausgeführt - prinzipiell kann diese Hubbegrenzung auch in ein rohrförmiges Rohrstück eingesetzt und mit diesem durch Bördeln oder Schweißen oder dergleichen verbunden werden. Zur Notbetätigung - beispielsweise bei einem Stromausfall - ist in der Hubbegrenzung 22 ein Handnotbolzen 24 axial verschiebbar geführt, wobei der Ankerraum 8 gegenüber der Umgebung mittels eines in eine Ringnut des Handnotbolzens 24 eingesetzten O-Rings 26 abgedichtet ist. Der Anker 10 unterteilt den Ankerraum 8 in einen bolzenseitigen Teilraum 28 und einen stößelseitigen Teilraum 30, die durch Längsbohrungen 32 des Ankers 10 miteinander verbunden sind. Die Innenumfangswandung des Rohrstücks 6, des Zwischenstücks 4 und des Polstücks 2 oder genauer gesagt, der Ringwandung 20 bilden eine Lauffläche 33 für den Anker 10 aus.

Das Polstück 2, das Zwischenstück 4 und das Rohrstück 6 sind beim dargestellten Polrohr durch Schweißen, vorzugsweise durch Kondensatorentladungs-schweißen (KES) verbunden, wobei die Füge- oder Aufschmelzbereiche 34, 36 zwischen diesen Bauelementen in Figur 1 lediglich angedeutet sind. Die konkrete Ausgestaltung kann gemäß den im Folgenden beschriebenen Polrohren auf unterschiedliche Weise erfolgen.

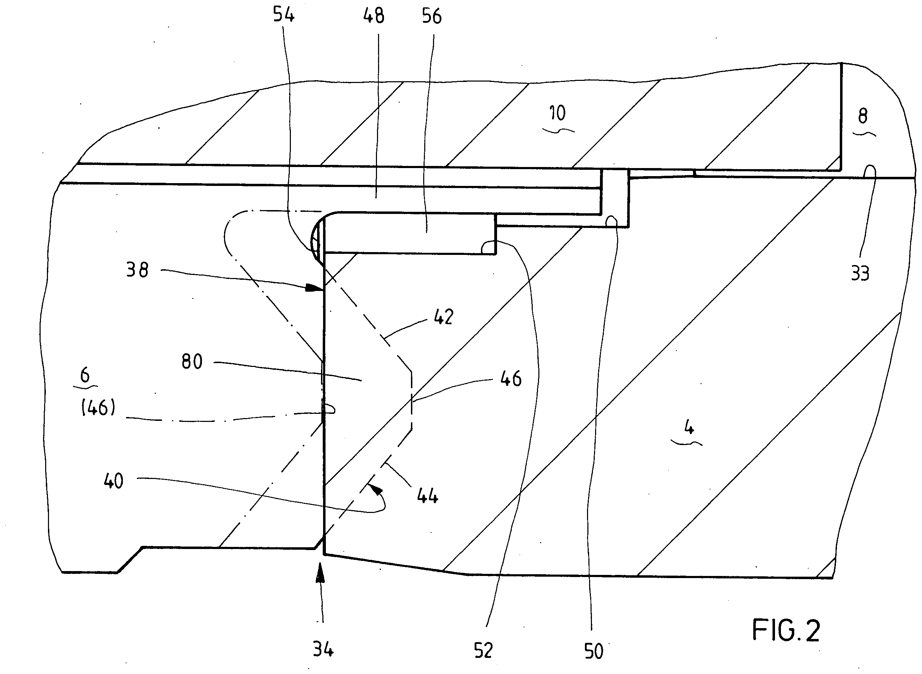

Figur 2 zeigt eine vergrößerte Darstellung des Fügebereichs 34, entlang dem das Zwischenstück 4 und das Rohrstück 6 miteinander verbunden sind. Die beiden dem Rohrstück 6 und dem Polstück 2 zugewandten Ringstirnflächen 38 (die dem Polstück zugewandte Ringstirnfläche ist nicht sichtbar) sind als ebene in Radialrichtung verlaufende Flächen ausgeführt. Die benachbarte ringförmige Stirnfläche 40 des Rohrstücks 6 ist mit einem umlaufenden, trapezförmigen Vorsprung 80 ausgeführt, der durch zwei umlaufende schräg angestellte Seitenflächen 42, 44 und eine ringförmige Abflachung 46 begrenzt ist. An dem Polstück 2 ist ein entsprechender trapezförmiger Vorsprung ausgebildet, der mit der ebenfalls nicht dargestellten radial verlaufenden Ringstirnfläche des Zwischenstücks 4 zusammenwirkt. In der Darstellung gemäß Figur 2 ist eine etwas ungewöhnliche Darstellungsform gewählt, wobei die ursprüngliche (vor dem Schweißen) Profilierungen der Ringstirnflächen des Zwischenstücks 4 und des Rohrstücks 6 (Polstücks 2) in der verschweißten Relativposition dieser Bauteile dargestellt sind. Der eigentliche Fügebereich 34 (nach dem Schweißen) verläuft bei dem dargestellten Polrohr etwa entlang der radialen Ringstirnfläche 38. Vor dem Verschmelzen liegt - wie in Figur 2 strichpunktiert angedeutet - die Abflachung 46 plan an der Ringstirnfläche 38 an. Durch Kondensatorentladungs-schweißen werden die beiden Fügepartner 4, 6 miteinander verbunden, wobei die Ringstirnfläche 38 des Zwischenstücks 4 jedoch im wesentlichen ihre Position beibehält, während der trapezförmige Vorsprung aufschmilzt und das Rohrstück 6 entsprechend in Axialrichtung nach rechts bewegt wird, bis es in seine in Figur 2 mit durchgezogener Linie dargestellte Fügeposition gelangt. Während dieses Aufschmelzvorganges ist der Wärmeeintrag in beide Fügepartner im wesentlichen gleich, so dass diese - bei etwa gleichem Schmelzpunkt - gleichzeitig und gleichmäßig aufschmelzen, so dass kein Verzug des Polrohrs 1 erfolgt. Der gleichmäßige Wärmeeintrag in beide Bauelemente wird erfindungsgemäß dadurch erzielt, dass die Querschnittsfläche des Fügepartners mit dem geringeren spezifischen Widerstand kleiner ausgelegt wird, als die Querschnittsfläche des Fügepartners mit dem größeren spezifischen Widerstand. Verwendet man beispielsweise einen austenitischen Stahl für das Zwischenstück 4 und einen herkömmlichen Automatenstahl für das Rohrstück 6, so ist der spezifische Widerstand des austenitischen Stahls größer als derjenige des Automatenstahls, entsprechend muß die Querschnittsfläche des aus dem Automatenstahl bestehenden Rohrstücks 6 soweit verringert werden, bis der resultierende Widerstand beider Fügepartner im wesentlichen gleich ist, so dass bei Bestromung während der Kondensatorentladung im wesentlichen gleiche Ströme fließen und ein entsprechend gleichmäßiger Wärmeeintrag zum Aufschmelzen des Fügebereichs erfolgt. Beim dargestellten Polrohr sind die Ringstirnfläche 38 und die Abflachung 46 als ebene Flächen ausgeführt - prinzipiell könnten diese auch als angewinkelte oder gekrümmte Flächen ausgeführt sein - es muß nur jeweils eine definierte Auflagefläche gewährleistet sein, um die vorbeschriebene Geometrie einhalten zu können.

Eine weitere Besonderheit des in Figur 2 dargestellten Polrohrs liegt darin, dass radial innerhalb des trapezförmigen Vorsprungs der Rohrstück-Stirnfläche 40 eine den Fügebereich 34 abdeckende Abdeckung in Form eines nabenförmigen Axialvorsprungs 48 ausgebildet ist. Dieser Axialvorsprung erstreckt sich weg vom Rohrstück 6 und taucht in eine Ausnehmung des Zwischenstücks 4 ein, die durch zwei stufenförmig versetzte Ausdrehungen, d.h. eine Ausdrehung 50 und eine tiefere Innenausdrehung 52 gebildet ist. Im Übergangsbereich zwischen dem Axialvorsprung 48 und dem trapezförmigen Vorsprung ist ein Einstich 54 ausgebildet. Dieser Einstich 54, der Axialvorsprung 48 und die Umfangswandung der Innenausdrehung 52 begrenzen einen Aufnahmeraum 56, der sich über einen Spalt zwischen dem Endabschnitt des Axialvorsprungs 48 und der Umfangswandung der Ausdrehung 50 zum Ankerraum 8 hin öffnet. Im Fügebereich zwischen dem in Figur 2 nicht dargestellten Polstück 2 und dem Zwischenstück 4 sind entsprechend ein Axialvorsprung und ein Aufnahmeraum ausgebildet. Die nabenförmigen Axialvorsprünge 56 decken die Fügebereiche 34 gegenüber dem Ankerraum 8 ab, so dass keine Schmelze in den Ankerraum eintreten kann. Evtl. aus dem Fügebereich austretende Schmelze kann im Aufnahmeraum 56 aufgenommen werden - auf diese Weise läßt sich ein Zusetzen der Lauffläche 33 verhindern, so dass der Anker 10 nicht klemmen kann.

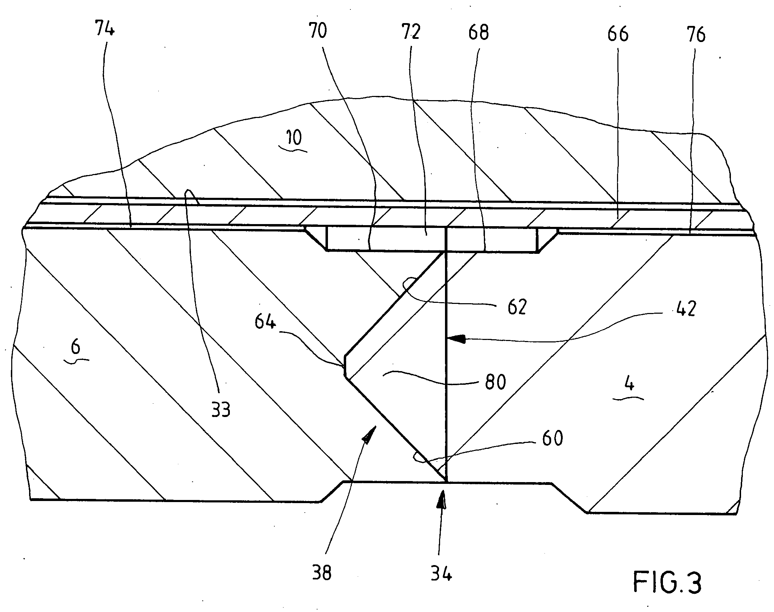

Bei dem dargestellten Polrohr sind die nabenförmigen Axialvorsprünge 48 am Rohrstück 6 und am Polstück 2 ausgebildet - in kinematischer Umkehr können die Axialvorsprünge selbstverständlich auch am Zwischenstück 4 ausgebildet sein und in Richtung zum Polstück 2 bzw. zum Rohrstück 6 auskragen, die dann gemeinsam mit den Ausnehmungen am Polstück und am Rohrstück dem Axialvorsprung entsprechende Aufnahmeräume bilden. Figur 3 zeigt eine Variante, bei der das Zwischenstück 4 aus einem Material mit vergleichsweise geringem spezifischen Widerstand ausgebildet ist, während das Material des Rohrstücks 6 einen höheren spezifischen Widerstand hat. Folglich muß nach der erfindungsgemäßen Lehre der Querschnitt der Ringstirnfläche 38 verringert werden. Dies erfolgt, in dem die Ringstirnfläche 38 entsprechend der Rohrstück-Stirnfläche 40 des vorbeschriebenen Polrohrs mit einem trapezförmigen Vorsprung 80 ausgebildet wird, der durch zwei Seitenflächen 60, 62 und eine Abflachung 64 begrenzt ist - die Querschnittsfläche dieser Abflachung 64 ist entsprechend der erfindungsgemäßen Lehre so ausgelegt, dass der resultierende Widerstand des Zwischenstücks 4 etwa demjenigen des Rohrstücks 6 ist, dessen Ringstirnfläche 38 als ebene Radialfläche ausgeführt ist. Vor dem Verschweißen liegt die Abflachung 64 auf der Ringstirnfläche 38 auf, so dass aufgrund der verringerten Querschnittsfläche des Fügepartners (Zwischenstück 4) mit geringerem spezifischen Widerstand) während des Schweißvorganges der Wärmeeintrag in das Zwischenstück 4 und das Rohrstück 6 im wesentlichen gleich ist. Der polseitige Fügebereich ist entsprechend ausgebildet.

Das Polrohr gemäß Figur 3 zeigt eine weitere Variante der vorbeschriebenen Abdeckung, wobei bei diesem Polrohr in den Aufnahmeraum des Polrohrs eine Hülse 66 eingesetzt ist, die die Fügebereiche 34, 36 (nicht gezeigt) überdeckt. Bei dem in Figur 3 dargestellten Polrohr sind sowohl am Zwischenstück 4 als auch am Rohrstück 6 (und am Polstück 2) umlaufende Innenausnehmungen 68, 70 ausgebildet, die gemeinsam mit der Hülse 66 einen Aufnahmeraum 72 ausbilden. Dieser ist über einen Spalt 74 zwischen dem Rohrstück 6 und der Hülse 66 mit dem Ankerraum verbunden. Der rohrstückseitige Aufnahmeraum 72 ist mit dem nicht dargestellten polstückseitigen Aufnahmeraum über einen Ringspalt 76 verbunden. Die Innenumfangsfläche der Hülse 66 bildet einen Teil der Lauffläche 33 für den Anker 10 aus. Hinsichtlich weiterer Details zu einer derartigen Abdeckung sei auch auf die Parallelanmeldung verwiesen.

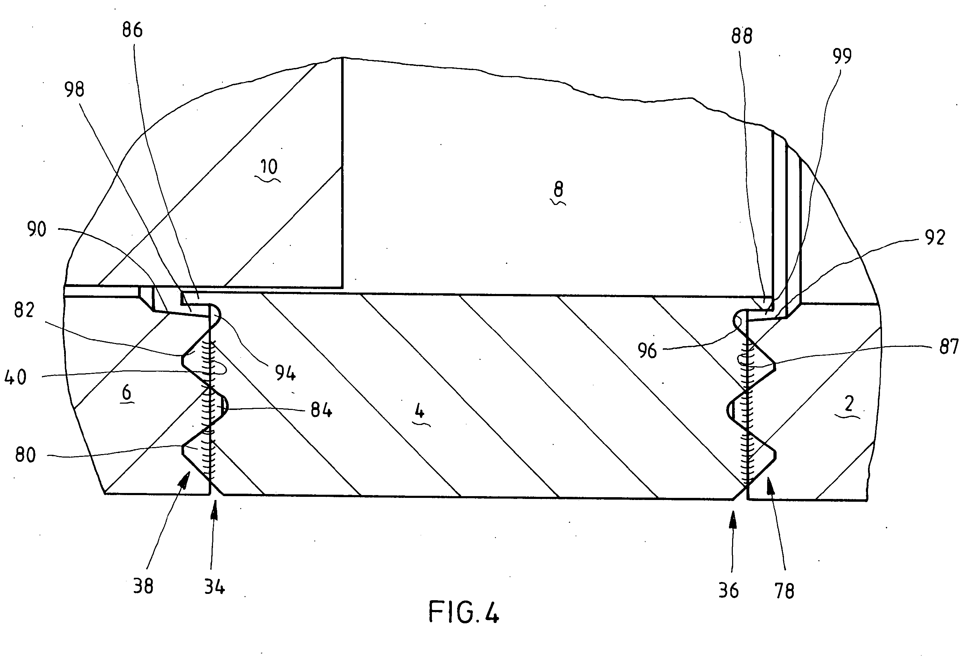

Figur 4 zeigt schließlich ein Polrohr, bei dem - wie beim letzten Polrohr - das Zwischenstück 4 mit geringerem spezifischen Widerstand als das Polstück 2 und das Rohrstück 6 ausgebildet ist, so dass entsprechend die wirksame Querschnittsfläche des Zwischenstücks 4 verringert werden muß um bei beiden Fügepartnern einen gleichen Energieeintrag zu gewährleisten. Bei dem in Figur 4 dargestellten Polrohr erfolgt diese Verringerung der Querschnittsfläche, indem die rohrstückseitige Ringstirnfläche 38 und die polstückseitige Ringstirnfläche 78 des Zwischenstücks 4 mit zwei trapezförmigen Vorsprüngen 80, 82 ausgeführt werden, die jeweils von zwei Seitenflächen und einer Abflachung begrenzt sind. Zwischen den beiden umlaufenden Vorsprüngen 82, 80 liegt ein Tal 84, das sich im verschweißten Zustand (siehe Figur 4) über die Fügebereiche 34, 36 hinaus ins Zwischenstück 4 hinein erstreckt und beim Verschweißen nicht verschmolzen wird. Die Rohrstück-Stirnfläche 40 und die Polstück-Stirnfläche 87 sind wieder als ringförmige Radialebenen ausgeführt, an denen beim Verschweißen die Abflachungen der beiden ringförmigen Vorsprünge 80, 82 anliegen. Die Querschnittsfläche ist wiederum so ausgelegt, dass ein gleicher Wärmeeintrag in die Fügepartner gewährleistet ist.

Bei diesem Polrohr ist ebenfalls eine Abdeckung der Fügebereiche 34, 36 zum Ankerraum 8 hin vorgesehen, wobei ähnlich dem Polrohr gemäß Figur 2 Axialvorprünge 86, 88 vorgesehen sind, die jedoch nicht am Rohrstück 6 und am Polstück 2 sondern an den beiden Ringstirnflächen 38 und 78 des Zwischenstücks 4 ausgebildet sind. Diese Axialvorsprünge 86, 88 tauchen in Innenausnehmungen 90, 92 des Rohrstücks 6 bzw. des Polstücks 2 ein. Im Übergangsbereich zwischen den Vorsprüngen 80, 82 und den Axialvorsprüngen 86, 88 sind wiederum Einstiche 94, 96 ausgebildet, so dass zwischen dem Axialvorsprung 86, 88 und dem Boden der entsprechenden Innenausdrehung 90, 92 ein Aufnahmeraum 98, 99 zur Aufnahme von Schmelze ausgebildet ist. Das Produkt des erfindungsgemäßen Verfahrens ist ein Polrohr, mit einem Zwischenstück, an das ein Polstück und ein Rohrstück angesetzt sind, die gemeinsam einen Aufnahmeraum für einen Anker des Hubmagneten begrenzen. Erfindungsgemäß ist die Geometrie der durch Schweißen verbundenen Stirnflächenbereiche des Zwischenstücks und des Rohrstücks und des Polstücks derart gewählt, dass unter Berücksichtigung der Schmelzpunkte der verwendeten Materialien der elektrische Widerstand der Fügepartner im Fügebereich im wesentlichen gleich ist, so dass beim Widerstandschweißen der Wärmeeintrag in beide Fügepartner etwa gleich ist.

## Patentansprüche

1. Verfahren zum Fügen eines Polrohres für einen Hubmagneten, insbesondere für ein hydraulisches Ventil, mit den Schritten:
- **Bereitsstellen** eines Polstücks (2), eines unmagnetischen Zwischenstücks (4) und eines Rohrstücks (6), wobei zumindest zwei dieser Fügepartner aus Material mit unterschiedlicher Leitfähigkeit ausgebildet sind und deren benachbarte Stirnflächen (38, 40, 78, 87) derart ausgebildet sind, dass sie durch elektrisches Aufschmelzen miteinander verbindbar sind, und über die ein Ankerraum (8) zur Aufnahme eines Ankers (10) ausbildbar ist,
- **Formgebung** der Stirnflächen (38, 40, 78, 87) vor dem Verschmelzen unter Berücksichtigung der Schmelzpunkte der verwendeten Materialien derart, dass der elektrische Widerstand der Fügepartner (2, 4, 6) im Fügebereich (34, 36) im wesentlichen gleich ist, wobei der Fügepartner aus dem Material mit dem niedrigeren spezifischen Widerstand stirnseitig mit einer geringeren Querschnittsfläche (46, 64) als der andere Fügepartner mit größerem spezifischen Widerstand ausgebildet ist, und
- **Fügen** durch elektrisches Aufschmelzen der Fügepartner (2, 4, 6).

2. Verfahren nach Patentanspruch 1, wobei der andere Fügepartner mit im wesentlichen ebener Stirnfläche (38, 42, 87) ausgeführt ist.

3. Verfahren nach Patentanspruch 1 oder 2, wobei der Fügepartner mit dem niedrigeren spezifischen Widerstand im Fügebereich (34, 36) mit zumindest einem trapezförmig vorspringenden Ringvorsprung (80, 82) versehen ist.

4. Verfahren nach Patentanspruch 3, wobei der Ringvorsprung am Scheitel eine die Querschnittsfläche bildende Abflachung (46, 64) hat.

5. Verfahren nach einem der vorhergehenden Patentansprüche, wobei das Aufschmelzen durch Widerstandschweißen, vorzugsweise durch Kondensatorentladungsschweißen erfolgt.

## Claims

1. Method for joining a pole tube for a solenoid actuator, in particular for a hydraulic valve, comprising the steps of:
- **providing** a pole piece (2), a non-magnetic intermediate piece (4) and a tube piece (6), wherein at least two of these parts to be joined are formed from material with differing conductivity and the adjacent end faces (38, 40, 78, 87) of which are formed in such a way that they can be connected to one another by electrical fusion, and by way of which an armature space (8) for receiving an armature (10) can be formed,
- **shaping** the end faces (38, 40, 78, 87) before the fusion, taking into account the melting points of the materials used in such a way that the electrical resistance of the parts to be joined (2, 4, 6) in the joining region (34, 36) is substantially the same, wherein the part to be joined of the material with the lower resistivity is formed at the end face with a smaller cross-sectional area (46, 64) than the other part to be joined with the greater resistivity, and
- **joining** the parts to be joined (2, 4, 6) by electrical fusion.

2. Method according to Patent Claim 1, wherein the other part to be joined is configured with a substantially planar end face (38, 42, 87).

3. Method according to Patent Claim 1 or 2, wherein the part to be joined with the lower resistivity is provided in the joining region (34, 36) with at least one trapezoidally projecting annular projection (80, 82).

4. Method according to Patent Claim 3, wherein the annular projection has at the vertex a flattened portion (46, 64) forming the cross-sectional area.

5. Method according to one of the preceding patent claims, wherein the fusion is performed by resistance welding, preferably by capacitor discharge welding.

## Revendications

1. Procédé de jonction d'un tube polaire pour un aimant de poussée, en particulier pour une soupape hydraulique, le procédé présentant les étapes suivantes :
- préparation d'une pièce polaire (2), d'une pièce intermédiaire non magnétique (4) et d'une pièce tubulaire (6), au moins deux de ces partenaires de jonction étant formés de matériaux présentant des conductivités différentes et leurs surfaces frontales (38, 40, 78, 87) voisines étant configurées de telle sorte qu'elles puissent être reliées les unes aux autres par fusion électrique et par le biais desquelles un espace (8) d'induit pour la réception d'un induit (10) peut être formé,
- façonnage des surfaces frontales (38, 40, 78, 87) avant la fusion en tenant compte du point de fusion du matériau utilisé, de telle sorte que la résistance électriques des partenaires de jonction (2, 4, 6) dans la zone de jonction (34, 36) soit essentiellement identique, le partenaire de fusion formé du matériau présentant la résistance spécifique la plus basse étant configuré frontalement avec une superficie de la section transversale plus petite (46, 64) que celle de l'autre partenaire de fusion présentant une plus grande résistance spécifique et
- jonction par fusion électrique des partenaires de fusion (2, 4, 6).

2. Procédé selon la revendication 1, dans lequel l'autre partenaire de fusion est réalisé avec une surface frontale (38, 42, 87) essentiellement plane.

3. Procédé selon la revendication 1 ou 2, dans lequel le partenaire de fusion présentant la résistance spécifique la plus basse est doté dans la zone de jonction (34, 36) d'au moins une saillie annulaire (80, 82) de forme trapézoïdale faisant saillie.

4. Procédé selon la revendication 3, dans lequel la saillie annulaire présente au niveau de son sommet un aplatissement (46, 64) qui forme la superficie de la section transversale.

5. Procédé selon l'une des revendications précédentes, dans lequel la fusion s'effectue par soudage par résistance, de préférence par soudage par décharge d'un condensateur.
